# EUROPÄISCHE PATENTSCHRIFT

(11) **EP 3 713 790 B1**
(45) Veröffentlichungstag und Bekanntmachung des Hinweises auf die Patenterteilung: **14.08.2024**
(21) Anmeldenummer: 18814777.1
(22) Anmeldetag: 15.11.2018
(51) Int. Cl.: B60P 7/08, G06Q 10/08

(54) **VERFAHREN ZUR TRANSPORTGUTÜBERWACHUNG**
METHOD OF MONITORING TRANSPORTATION GOODS
PROCÉDÉ DE SURVEILLANCE DE MARCHANDISES DE TRANSPORT

(30) Priorität: 20.11.2017 DE 102017010707
(43) Veröffentlichungstag der Anmeldung: 30.09.2020
(73) Patentinhaber: Spanset Inter AG, 8832 Wollerau (CH)
(72) Erfinder: EHNIMB, David, 8800 Thalwill (CH)
(74) Vertreter: Taubert, Diana
(86) Internationale Anmeldenummer: PCT/EP2018/000515
(87) Internationale Veröffentlichungsnummer: WO 2019/096438

(56) Entgegenhaltungen:
- DE-A1- 102014 012 508

## Beschreibung

Die Erfindung beschreibt ein Verfahren zum Betrieb einer Sicherungsvorrichtung, die zur Sicherung eines Ladegutes dient, das eine Ladeeinheit bilde kann, während das Ladegut an einem Ladungsträger oder an einem Fahrzeug mittels einer Sicherungsvorrichtung arretiert ist, an der Sicherungsvorrichtung eine Messvorrichtung für eine Zugspannung der Sicherungsvorrichtung angeordnet ist, die Messvorrichtung eine Datenverarbeitungsanlage mit einer Vorrichtung zur Signalübertragung an eine Zentraldatenverarbeitungsanlage enthält. Damit behandelt die Erfindung ebenfalls ein Verfahren zur Messung einer Vorspannkraft und damit zum Betrieb der Sicherungsvorrichtung.

Aus der DE 10 2014 012 508 A1 geht eine Vorrichtung hervor, nämlich ein Fahrzeug, das eine Vorrichtung zur Warnung vor Diebstahl und Verlust von Transportgütern enthält. Dort ist mittels eines Ladungsmelders das Vorhandensein von Ladegut erfassbar. Mittels eines Sicherungssensors ist erfassbar, ob die mechanische Ladungssicherung aktiviert ist und mittels einer zentralen Kontrollbaugruppe sind Signale von mehreren Ladungsmeldern erfassbar. Diese können zum einen dem Führer eines Fahrzeugs oder externen Kontrollpersonen angezeigt werden, wobei lediglich die Vorrichtung beschrieben ist.

Aus der WO 2009/113 873 A1 ist eine Vorrichtung und ein Verfahren zur Warnung vor Diebstahl und Verlust von Transportgütern bekannt. Der dort offenbarte Sensor registriert Veränderungen und die Vorrichtung kann einen Alarm aussenden, wenn die Ladung nicht verzurrt, also gelöst ist. Der entsprechende Fahrer kann gewarnt werden. Darüber hinaus kann eine Nachricht an eine Zentrale oder eine Zentrale eines Transportunternehmens gesandt werden. Es werden akustische, optische Signale zur Signalwarnung beschrieben, als auch die Aufnahme von Videos. Das Verfahren beschreibt jedoch lediglich die Detektion und die Information beispielhaft eines Fahrers eines Fahrzeuges, wenn die Vorspannkraft einer Sicherungsvorrichtung, so eines Spanngurts, nachlässt. Dies birgt jedoch Nachteile in sich, gerade dann, wenn ein Fahrer oder eine Person abgelenkt ist oder ein derartiges Signal übersieht.

Die Aufgabe der Erfindung besteht darin, das vorbeschriebene Verfahren zum Betrieb der Sicherungsvorrichtung zu optimieren.

Diese Aufgabe wird erfindungsgemäß durch den Hauptanspruch 1 gelöst, wobei die Unteransprüche weitere erfindungsgemäße Ausgestaltungsvarianten dieser Lösung beinhalten.

Bei dem erfindungsgemäßen Verfahren zum Betrieb einer Sicherungsvorrichtung und damit auch zur Sicherung und/oder zur Lagebestimmung eines Ladegutes, das eine Ladungseinheit bilden kann, ist das Ladegut an einem Ladungsträger, so einer Palette oder an einem Fahrzeug mittels mindestens einer Sicherungsvorrichtung, so beispielhaft eines Spanngurtes oder Ähnlichem arretiert oder wird arretiert. Im Rahmen der Erfindung ist ebenfalls gelegen, dass das Ladegut aus mehreren Ladeeinheiten gebildet wird und auf jede Ladeeinheit das Verfahren separat angewendet wird. Das Ladegut stellt dabei die Gesamtheit der Ladung dar, welche wie dargelegt auch nur aus einer Ladeeinheit bestehen kann. Die Ladeeinheit bilden einzelne Bestandteile der Ladung, die zu sichern sind. Das Verfahren bezieht sich auf eine Ladeeinheit. Zu Zwecken der Klarheit bildet innerhalb der Beschreibung die Ladung nur eine Ladeeinheit. Die Erfindung ist darauf aber nicht beschränkt.

Dabei ist an der mindestens einen Sicherungsvorrichtung eine bekannte Messvorrichtung für eine Zugspannung der mindestens einen Sicherungsvorrichtung angeordnet. Die Messvorrichtung enthält eine Datenverarbeitungsanlage mit einer Vorrichtung zur Signalübertragung an eine Zentraldatenverarbeitungsanlage, so beispielhaft eine Blackbox in einem Fahrzeug oder außerhalb desselben oder eine sonstige externe Datenverarbeitungsanlagen oder externen Datenspeicher, wie eine Cloud bzw. eine spezifische Adresse in einem externen Datenspeicher, wobei die Datenverarbeitungsanlage mit der Zentraldatenverarbeitungsanlage drahtlos verbunden ist und wobei die mindestens eine Sicherungsvorrichtung in der Zentraldatenverarbeitungsanlage vorregistriert ist mit der Identifikation der jeweiligen Datenverarbeitungsanlage, der Standard Tension Force und/oder einem visuell erkennbaren Merkmal als Parametertabelle 3.

**S1:** Es erfolgt die Festlegung und Speicherung eines Sollwertes (Wert 1) einer Vorspannkraft pro Ladegut, unter Beachtung eines Friktionskoeffizienten der Ladefläche, des Gewichtes des Ladeguts und der gültigen Ladungssicherungsnorm in der Zentraldatenverarbeitungsanlage als Parametertabelle 1.

**S2:** Ferner erfolgt die Festlegung und Speicherung mindestens eines Sollwertes eines Lagedatums und einer Position und zwar mindestens eines geplanten Entladeortes pro Ladegut in der Zentraldatenverarbeitungsanlage als Parametertabelle 2.

**S3:** Sodann erfolgt die Errechnung eines Vorschlages, pro Ladegut, basierend auf dem jeweils dem Ladegut zuhörenden Wert 1 in Parametertabelle 1 sowie die noch zu Verfügung stehende mindestens eine Sicherungsvorrichtung gemäß Parametertabelle 3, der für das Ladegut einzusetzenden individuellen mindestens einen Sicherheitsvorrichtung und das Speichern dieses Vorschlages in Datentabelle X.

**S4:** Nachfolgend erfolgt das Sichern des Ladeguts mittels der mindestens einen vorgeschlagenen Sicherungsvorrichtung.

**S5:** Dann kommt es zum Erfassen der Vorspannkraft (Wert A) der jeweils eingesetzten mindestens einen Sicherheitsvorrichtung durch die einzelne Messvorrichtung in der Zentraldatenverarbeitungsanlage als Datentabelle A.

**S6:** Es folgt dann ein Überprüfen, ob die Summe der Werte A pro Ladegut aus Datentabelle A dem Wert 1 desselben Ladeguts aus Parametertabelle 1 entspricht. Bei Nichterreichung der Vorspannkraft wird ein Informationsdatum generiert und das Verfahren wird ab Verfahrensschritt S3 wiederholt. Kommt es zur Erreichung der Vorspannkraft wird ein Datum an die Zentraldatenverarbeitungsanlage gesendet, das normgerecht gesichert wurde.

**S7:** Die Datentabelle A wird sodann in gesteuerten Zeitabständen mit neuen durch die Messvorrichtung ermittelten Werten ergänzt.

In weiterer Ausgestaltung ist vorgesehen, dass die Zentraldatenverarbeitungsanlage während eines Transports, wobei unter Transport der gesamte Anwendungsvorgang der Sicherungsvorrichtung gemeint ist, die Summe der Werte A pro Ladegut mit dem Wert 1 desselben Ladeguts vergleicht.

Basierend auf einer allfälligen Abnahme der Vorspannkraft in der mindestens einen Sicherungsvorrichtung und unter Berücksichtigung einer vorprogrammierbaren zeitlichen Sicherheitsmarge wird von der Sicherungsvorrichtung ein Datum, zum Beispiel ein Signal an die Zentraldatenverarbeitungsanlage gesendet, wenn innerhalb einer zeitlichen Sicherheitsmarge die betroffene mindestens eine Sicherheitsvorrichtung nachzuspannen ist. Gleichzeitig oder alternativ kann auch angegeben werden, welches visuell erkennbare Merkmal aus Parametertabelle 3 die betroffene mindestens eine Sicherheitsvorrichtung identifiziert.

Auch kann vorgesehen werden, dass mittels einer farblichen Anzeige visuell einem Nutzer signalisiert wird, dass er entweder "grün", das heißt ohne Handlungsbedarf unterwegs ist - gemeint ist der Zustand der Arretierung des Ladeguts, zum Beispiel bei einem Transport. Es besteht kein Bedarf das Ladegut nachzuspannen. "Gelb" bedeutet, dass der Nutzer innerhalb der zeitlichen Sicherheitsmarge das Ladegut nachspannen sollte. "Rot" bedeutet, es wird der jeweilige Werte 1 aus Parametertabelle 1 bereits effektiv unterschritten. Das Ladegut ist nachzuspannen. Die Arretierung des Ladeguts ist nicht mehr normgerecht oder gesetzeswidrig. Ein Transportvorgang muss unverzüglich unterbrochen werden, um das Ladegut erneut mittels der mindestens einen Sicherungsvorrichtung zu arretieren.

In einer weiteren Ausgestaltung kann ebenfalls vorgesehen werden, dass die Zentraldatenverarbeitungsanlage fortlaufend die Position des Ladeguts in der Zentraldatenverarbeitungsanlage als Datentabelle B speichert. Auch ist es möglich, dass eine Route für die Erreichung der in der Parametertabelle 2 enthaltenen Entladeorte als Datentabelle C gespeichert ist, was in der Zentraldatenverarbeitungsanlage erfolgt. Ferner kann vorgesehen sein, dass fortlaufend die Datentabelle B mit der Datentabelle C verglichen wird. Eine Ausgestaltung sieht dabei ebenfalls vor, dass Daten aus Datentabellen A und/oder B und/oder C in einen externen Datenspeicher mit einer definierten Frequenz übertragen werden, also in regelmäßigen Abständen.

Weiterhin ist vorgesehen, das bei einem Abfallen der Vorspannkraft der mindestens einen Sicherheitsvorrichtung des Ladeguts, wobei die Vorspannkraft in der in Datentabelle X gespeichert ist, an einem anderen Ort als in Parametertabelle 2 vorgesehen, ein Datum, so ein Alarm an eine vorprogrammierte Adresse an dem externen Datenspeicher gesendet wird. So ist es möglich, unautorisierte Abweichungen von einer Transportroute anzuzeigen, um Gegenmaßnahmen einzuleiten. Es können beispielhaft Behörden informiert werden oder sonstige bekannte Sicherungsmaßnahmen ergriffen werden.

Auch kann dabei spezifisch vorgesehen werden, dass eine Abweichung von einer errechneten Route mit der tatsächlichen befolgten Route bei dem Transport des Ladeguts ohne vorgängig erfolgter spezifischer Autorisierung einer vorprogrammierten Adresse an dem externen Datenspeicher gemeldet wird.

Ebenfalls kann in einer weiteren Ausführungsform der Erfindung vorgesehen sein, dass mehrere Sicherungsvorrichtungen in der Zentraldatenverarbeitungsanlage mit einem Identifikationsmerkmal, so einem Datum, einer Standard Tension Force und/oder einem visuell erkennbaren Merkmal vorregistriert sind, wobei die vorgenannten drei Merkmale eine **Parametertabelle 3** bilden.

Das erfindungsgemäße Verfahren läuft in diesem Fall in folgenden Schritten ab.

**S1:** Zuerst erfolgt die Festlegung und Speicherung mindestens des Sollwertes der Vorspannkraft des Ladeguts als **Wert 1,** unter Einbeziehung des Friktionskoeffizienten der Ladefläche, des Gewichtes des Ladeguts und der Ladungssicherungsnorm in der Zentraldatenverarbeitungsanlage als **Parametertabelle 1.**

**S2:** Danach erfolgt die Auswahl einer einzelnen Sicherungsvorrichtung für das Ladegut durch die Zentraldatenverarbeitungsanlage unter Berücksichtigung des mindestens einen Sollwerts der Vorspannkraft, **Werts 1,** aus der **Parametertabelle 1,** welcher dem Ladegut zugeordnet ist unter Berücksichtigung der auswählbaren Sicherungsvorrichtungen gemäß **Parametertabelle 3.** Sodann erfolgt eine Speicherung der ausgewählten Sicherungsvorrichtung in der Zentraldatenverarbeitungsanlage.

**S3:** Sodann wird des Ladeguts mittels der ausgewählten Sicherungsvorrichtung gesichert, zum Beispiel verzurrt.

**S4:** Nachfolgend wird die durch das Sichern des Ladeguts erreichte Vorspannkraft der ausgewählten Sicherheitsvorrichtung je Ladegut als **Wert 2** durch die Messvorrichtung erfasst und es erfolgt eine Übermittlung des **Werts 2** an die Zentraldatenverarbeitungsanlage zu Speicherung als **Datentabelle A.**

**S5:** Als weiterer Schritt erfolgt danach ein Vergleich des **Werts 2,** also der erreichten Vorspannkraft, aus der **Datentabelle A** mit dem **Wert 1** als Sollwert der Vorspannkraft des Ladeguts aus der **Parametertabelle 1.**

**S6:** Bei Übereinstimmung von **Wert 2** mit **Wert 1** erfolgt die Abgabe eines Quittierungsdatums der Messvorrichtung an die Zentraldatenverarbeitungsanlage, dass die Sicherung normgerecht erfolgte oder es wird eine alternative Sicherungsvorrichtung von der Zentraldatenverarbeitungsanlage ausgewählt. Das Verfahren wird sodann beginnend mit dem Verfahrensschritt **S3** weitergeführt, also nochmals ausgeführt und zwar so lange bis die Abgabe des Quittierungsdatums erfolgt oder es wird anstelle der alternativen Sicherungsvorrichtung eine weitere Sicherungsvorrichtung von der Zentraldatenverarbeitungsanlage vorgeschlagen beziehungsweise ausgewählt, welche geeignet ist, die fehlende Vorspannkraft bereitzustellen. Diese wird dann von der das Ladegut betreuenden Person zusätzlich zur Sicherung des Ladeguts eingesetzt.

In weitere Ausgestaltung der Erfindung ist vorgesehen, dass die Datentabelle A in definierten zeitlichen Intervallen mit weiteren durch die Messvorrichtung ermittelten Werten 2 ergänzt wird, was eine regelmäßige Überprüfung und Speicherung des Werts 2 als Istwert der Vorspannkraft gewährt. Die Messvorrichtung ermittelt also während der Arretierung des Ladeguts den **Wert 2** in definierten zeitlichen Intervallen. Der jeweilige Wert 2 wird sodann an die Zentraldatenverarbeitungsanlage übermittelt, welche diesen mit dem **Wert 1** vergleicht und bei einer Abnahme von **Wert 2** unter Berücksichtigung einer vordefinierten zeitlichen Sicherheitsmarge die Zentraldatenverarbeitungsanlage ein Datum generiert, speichert und anzeigt, dass innerhalb der zeitlichen Sicherheitsmarge das Ladegut erneut gesichert werden muss. Alternativ oder gleichzeitig kann auch das generierte Datum an eine berechtigte Stelle versandt werden, damit diese aktiviert wird und Sicherungshandlungen einleitet. Berechtigte Stelle im Sinne der Erfindung kann zum Beispiel eine Überwachungsvorrichtung, eine Überwachungsperson, eine staatliche Einrichtung, etwas die Polizei, oder auch eine Signaleinrichtung sein.

Beispielhaft kann auch vorgesehen sein, dass die Messvorrichtung anfängt optisch oder akustische Signale abzugeben, so etwa anfängt zu blinken und/oder einer berechtigen Stelle, so eine Überwachungsperson wird mitteilt, dass innerhalb der zeitlichen Sicherheitsmarge das Ladegut erneut gesichert werden muss, so nachgespannt werden muss. Das kann beispielhaft ein Fahrzeugführer sein, welcher einen Transport des Ladeguts durchführt.

Ferner kann vorgesehen werden, dass nach Verwendung, auch mehrmaliger Verwendung, anhand der ermittelten Werte 2 der Zustand der ausgewählten Sicherungsvorrichtung ermittelbar ist. Es lässt sich so feststellen, ob die Sicherungsvorrichtung weniger effizient arbeitet und demzufolge inspiziert und gegebenenfalls ersetzt werden muss.

Es wurde bereits erwähnt, dass die Messvorrichtung während der Arretierung des Ladeguts den **Wert 2** je Ladegut in definierten zeitlichen Intervallen ermittelt, der jeweilige **Wert 2** an die Zentraldatenverarbeitungsanlage übermittelt wird und welche diesen Wert mit dem **Wert 1** vergleicht. Ergänzend kann auch hier wieder vorgesehen werden, dass der jeweilige Wert 2 mittels einer variablen optischen Anzeige, so einer Ampelanzeige oder einer farbvariablen Lichtquelle, abhängig vom jeweiligen Wert **2** ein Status der Sicherung des Ladeguts signalisierbar ist. Bei einer Anzeige "Grün" besteht kein Handlungsbedarf. Bei "Gelb" ist innerhalb der vordefinierten zeitlichen Sicherheitsmarge die Sicherungsvorrichtung erneut zu sichern, so etwa nachzuspannen. Bei "Rot", wenn der Wert 1 aus Parametertabelle 1 bereits unterschritten ist, erfolgt die Sicherung nicht mehr normgerecht oder gegebenenfalls gesetzeswidrig. Dieser Zustand ist unverzüglich aufzuheben. So hat beispielsweise ein Fahrzeugführer ein zu transportieren ist Ladegut nachzusichern, in dem er unverzüglich den Transport unterbricht.

Weiterhin kann vorgesehen werden, dass die ausgewählte Sicherungsvorrichtung, so auch ihre Datenverarbeitungsanlage, eine geografische Position mittels bekannter Verfahren und Systemen, wie etwa GPS, ermittelt und mindestens einen Sollwert eines Lagedatums als geografische Position, so mindestens ein geplanter Entladeort oder mehrere Lagedaten in Form einer geplanten Route, je Ladegut in der Zentraldatenverarbeitungsanlage als Parametertabelle 2 gespeichert ist.

Während der Sicherung des Ladeguts wird sodann fortlaufend oder in definierten zeitlichen Intervallen durch die Zentraldatenverarbeitungsanlage die geografische Position des Ladeguts in dieser als die Datentabelle B gespeichert.

Es kann wie dargestellt auch vorgesehen sein, dass in der Zentraldatenverarbeitungsanlage eine Route für die Erreichung des in der Parametertabelle 2 enthaltenen Entladeortes als Sollwert des Lagedatums gespeichert ist. Das ist die Datentabelle C. Die Datentabelle B wird sodann während der Sicherung fortlaufend mit der Datentabelle C verglichen. Bei einem Abweichen der Datentabelle B von der Datentabelle C wird ein Datum generiert und an die Zentraldatenverarbeitungsanlage und/oder an eine berechtige Stelle versandt. Dabei kommt beispielhaft ein optisches oder akustisches Signal in Betracht, eine elektronische Nachricht, die an die berechtigte Stelle versandt wird, welche sodann gegen das Abweichen des Istzustandes vom Sollzustand, also dem Abweichen der Datentabelle B von der Datentabelle C, vorgehen kann. Wenn das Datum an die Zentraldatenverarbeitungsanlage und/oder die berechtige Stelle gesandt wird kann im Rahmen der Erfindung ein definierter Sicherungsprozess ausgelöst werden, der dazu beiträgt, dass Ladegut und/oder das Fahrzeug, welche das Ladegut transportiert, zu sichern. So können beispielhaft automatische Vorrichtung jeglicher Art aktiviert werden, so beispielhaft unbemannte Flugkörper.

Ferner kann selbiges bei einem Abweichen der Datentabelle B von der Datentabelle C, eines abweichenden Sollwertes als Lagedatum oder einer Mehrzahl dieser Sollwerte als abweichende Route, was ohne Autorisierung erfolgt, so beispielhaft ohne vorherige spezifische Autorisierung, geschehen.

Ebenfalls kann im Rahmen des Verfahrens vorgesehen werden, dass bei einer Verminderung des Werts 1 an einem anderen Sollwert als Lagedatum als in Parametertabelle 2 gespeichert, selbiges ausgeführt wird und ein Datum generiert und an die Zentraldatenverarbeitungsanlage und/oder an die berechtige Stelle versandt wird.

Ferner ist im Rahmen des Verfahrens allgemein vorgesehen, dass wenn die Zentraldatenverarbeitungsanlage eine Blackbox ist, diese in regelmäßigen Abständen Daten aus den Datentabellen A und/oder B und/oder C an einen externen Speicherort überträgt, beispielhaft an eine definierte Adresse in einem virtuellen Speicher, so der Cloud.

Dabei kann auch vorgesehen sein, dass der durch die Auswertung der Daten ermittelte Zustand der Sicherungsvorrichtung an eine vorprogrammierte, also eine definierte weitere Adresse in der Cloud gesendet wird.

Als Ladungsträger im Sinne der Erfindung ist jegliche Vorrichtung zu verstehen, welches ein Ladegut bestimmungsgemäß aufnehmen kann. Unter Parametertabelle und Datentabelle im Sinne der Erfindung ist jegliche Anordnung von Daten oder Messwerten zu verstehen, welche für die Ausführung des vorgenannten Verfahrens geeignet ist. Datum im Sinne der Erfindung ist jede maschinenlesbare und maschinenbearbeitbare digitale Repräsentation von Informationen, welche die Ausführung des erfindungsgemäßen Verfahrens gewährleisten.

Durch das erfindungsgemäße Verfahren wird die bisher bekannte Messung einer Vorspannkraft einer Sicherungsvorrichtung zudem weiter optimiert.

Die Erfindung wird nachfolgend anhand eines Ausführungsbeispiels unter Bezugnahme auf die Figuren weiter erläutert. Dabei ergeben sich weitere Vorteile, Merkmale und Ausgestaltungen der Erfindung.

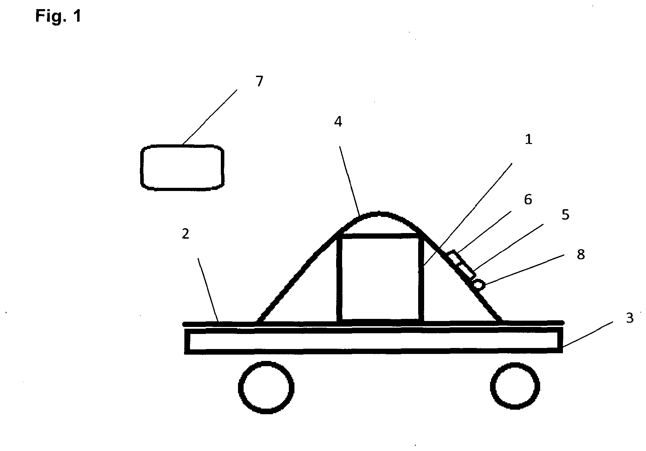

**Fig. 1** zeigt eine schematische Darstellung eines gesicherten Ladegutes auf einem Fahrzeug.

Gemäß dem Ausführungsbeispiel soll an ein Fahrzeug **3** ein Ladegut **1** mittels einer von mehreren auswählbaren Sichtbarmachungsvorrichtungen **4, 4'** arretiert werden. An den jeweiligen Sicherungsvorrichtungen **4** und **4'** ist jeweils eine Messvorrichtung **5** für die Ermittlung einer Zugspannung der Sicherungsvorrichtung 4 angeordnet. Die Messvorrichtung **5** weist eine Datenverarbeitungsanlage **6** mit einer Vorrichtung zur Signalübertragung an eine Zentraldatenverarbeitungsanlage **7,** so eine Blackbox auf. Die Datenverarbeitungsanlage **6** ist mit der Zentraldatenverarbeitungsanlage **7** drahtlos verbunden.

Die jeweiligen Sicherungsvorrichtungen **4 und 4'** sind in der Zentraldatenverarbeitungsanlage **7** mit einer Identifikationsnummer, im Ausführungsbeispiel eine Fahrzeugkennzeichnung, einer Standard Tension Force der Sicherungseinrichtung und einem visuell erkennbaren Merkmal vorregistriert. Diese Merkmale bilden die Parametertabelle. 3.

Ebenfalls ist der Friktionskoeffizient der Ladefläche des Fahrzeugs **3** bekannt, ein Gewicht des Ladeguts **1** und eine Ladungssicherungsnorm und im Ausführungsbeispiel in der Zentraldatenverarbeitungsanlage **7** gespeichert.

Entsprechende Daten können händisch in die Zentraldatenverarbeitungsanlage eingegeben werden oder es werden über Schnittstellen die Daten importiert. Dazu zählen alle relevanten Daten, um das Verfahren durchzuführen, wie auch eine Route oder und/oder ein Lade- bzw. Entladeort. Auch werden alle während des Verfahrens ermittelten Daten in der zentralen Datenverarbeitungsanlage gespeichert, was im Ausführungsbeispiel einmal eine Blackbox ist bzw. eine externe Speichervorrichtung, wie ein Zentralcomputer oder eine virtuelle Rechnereinheit, wie die Cloud. Dort werden die Daten an eine spezifische Adresse gesandt und dort gespeichert.

Der Sollwert der Vorspannkraft (Wert 1) des Ladeguts **1** wird nun unter Einbeziehung des Fiktionskoeffizienten der Ladefläche, des Gewichts des Ladeguts und der Ladungssicherungsnorm in der Zentraldatenverarbeitungsanlage als Parameter **1** errechnet. Im Ausführungsbeispiel ist der errechnete Wert 1 nicht der von der Ladungssicherungsnorm geforderte Minimalwert der Vorspannung, Wert 0, für die Ladeeinheit. Er ist vielmehr um einen durch die Ladungssicherungsnorm vorgegebenen Faktor erhöht. Im Ausführungsbeispiel ist er 20 Prozent größer.

Basierend auf der sich am Fahrzeug befindenden Sicherungsvorrichtungen **4, 4',** so Zurrungen, schlägt die Zentraldatenverarbeitungsanlage **7** eine passende Sicherungsvorrichtung **4** für das Ladegut **1** vor. Die visuelle Identifikation **8** dieser ausgewählten Sicherungsvorrichtung **4** wird gleichsam durch die Zentraldatenverarbeitungsanlage angeben.

Ein Führer des Fahrzeugs **3** sucht die ausgewählte Sicherungsvorrichtung **4** anhand der visuellen Identifikation **8** aus und verzurrt das Ladegut **1** mit der ausgewählten Sicherungsvorrichtung **4.** Unter Führer im Sinne der Erfindung ist jede Person zu verstehen, welche die ausgewählte Sicherungsvorrichtung **4** bestimmungsgemäß bedienen kann.

Die Messvorrichtung **5** erfasst nunmehr die durch das Sichern des Ladeguts erreichte Vorspannkraft als Wert 2 und übermittelt diesen Wert 2 an die Zentraldatenverarbeitungsanlage zur Speicherung als Datentabelle A.

Nun erfolgt ein Vergleich des Werts 2, das heißt der erreichten Vorspannkraft, aus der Datentabelle A mit dem Wert 1 als Sollwert der Vorspannkraft des Ladeguts **1** aus der Parametertabelle 1.

Bei Übereinstimmung von Wert 2 mit Wert 1 erfolgt die Abgabe eines Quittierungsdatums, das im Sinne der Erfindung auch aus mehreren Daten bzw. Signalen bestehen kann, so mindestens einen in der Zentraldatenverarbeitungsanlage oder der Datenverarbeitungsanlage zu speichernden Datum und/oder einem optischen und/oder akustischen Signal.

Dabei wird über die Datenverarbeitungsanlage oder die Zentraldatenverarbeitungsanlage gesteuert mittels, der variablen optischen Anzeige, in Ausführungsbeispiel einer Ampelanzeige visuell dargestellt, in welchem Verhältnis die tatsächliche bestehende Vorspannung, Wert 2, der Sicherungsvorrichtung **4** zu dem Wert 1 und dem Wert 0 steht. Ist der Wert 2 gleich oder über dem Wert 1 gelegen, so wird eine grüne Farbe angezeigt. Liegt der Wert 2 zwischen Wert 1 und Wert 0, so wird eine gelbe Farbe angezeigt. Gleich oder Unterhalb von Wert 0 wird eine rote Farbe angezeigt. Die Anzeige erfolgt durch bekannte Vorrichtung, wie beispielhaft Leuchtdioden oder ein Display.

Diese Anzeige erfolgt während der gesamten Sicherung des Ladeguts, so auch während eines Transportvorgangs mit einem Fahrzeug, wobei als Fahrzeug jegliche Art von Fahrzeug gemeint ist.

Eine rote Anzeige bedeutet, es wird die durch die gültige Ladungssicherungsnorm festgelegte minimale Vorspannkraft nicht erreicht Wert 0 wird unterschritten. In diesem Fall erfolgt der Transport nicht gemäß Ladungssicherungsnorm. Es muss unverzüglich eingegriffen werden, manuell oder automatisch, um das ausgewählte Sicherungsmittel nachzuspannen und diesen Zustand zu korrigieren. Eine gelbe Anzeige bedeutet, es sollte innerhalb einer definierten Zeitspanne - als Standardeinstellung sind 15 Minuten vorgesehen - manuell oder automatisch eingegriffen werden, um den Zustand "grün" wiederherzustellen.

Im Ausführungsbeispiel ist der Wert 1 wie vorab beschrieben um einen durch die Ladungssicherungsnorm vorgegebenen Faktor erhöht, so um 20 Prozent größer. Im Ausführungsbeispiel ist aber auch vorgesehen, dass der Wert 1 davon unabhängig dynamisch definiert werden kann. Er ist veränderbar. Das kann beispielhaft basierend auf einen in einem definierten Zeitintervall, so eine Stunde, erfolgten Verlust der Vorspannung, dem Wert 2, der Sicherungsvorrichtung **4** und/oder anderen Transportdaten, die in der Regel variabel sind, wie die Anzahl von Erschütterungen durch Unebenheiten eines Transportwegs erfolgen, um einem Transporteur genügend Vorwarnung für die mögliche Erreichung oder Unterschreitung des Minimalsollwertes, Wert 0, was den Zustand "rot" bedeuten würde, zu geben.

Ein wiederholt aufgetretener Abfall der Vorspannung der Sicherungsvorrichtung 4, also des Werts 2, kann die Festlegung einer höheren Sicherheitsmarge, nämlich einen höheren Wert 1 zur Folge haben.

Ferner ist vorgesehen, das in der Zentraldatenverarbeitungsanlage eine vorgegebene Route eines Transportwegs, mehrere Sollwerte eines Lagedatums, als Datentabelle C gespeichert ist. Dies geschieht im Ausführungsbeispiel durch ein Bordsystem des Fahrzeugs **3** oder durch die Zurverfügungstellung von Daten betreffend die Route durch sonstige Vorrichtungen oder Datenquellen.

Im Ausführungsbeispiel ermittelt die Datenverarbeitungsanlage **6** der ausgewählten Sicherungsvorrichtung **4** eine geographische Position. Die Zentraldatenverarbeitungsanlage **7** speichert fortlaufend die geographische Position des Ladeguts als Datentabelle B.

Fortlaufend wird dabei die Datentabelle B mit der Datentabelle C verglichen. Bei einem Abweichen der Datentabelle B von der Datentabelle C wird ein Datum als Information an eine berechtigte Stelle generiert und versandt und/oder es wird ein Alarm ausgelöst. Das geschieht auch dann, wenn ohne Autorisierung ein Abweichen des Sollwerts als Lagedatum, also eine geänderte Datentabelle C, vorgenommen wird.

Eine geänderte Route, d.h. eine geänderte Datentabelle C, ist vorab durch eine dazu autorisierte Stelle, so einer Person, wie beispielsweise ein Dispatcher, freizugeben.

Ebenfalls ist im Ausführungsbeispiel vorgesehen, das in Abhängigkeit von einer Veränderung, so einer Verminderung, der Vorspannung der ausgewählten Sicherungsvorrichtung **4,** des Werts 2, der in der Datentabelle A gespeichert ist, unter Berücksichtigung des definierten Zeitintervalls, der mindestens eine Sollwert des Lagedatums, so der Entladeort oder die Route, änderbar ist. Das erfolgt in der Regel durch die Zentraldatenverarbeitungsanlage **7** oder diese schlägt eine Änderung des Entladeortes oder der Route vor. Dies soll dazu führen, dass ein neuer Entladeort als Zwischenziel bestimmt wird oder die Route optimiert wird, so dass während des Transportvorgangs ein Erreichen oder Unterschreiten des Werts 0 der Vorspannung der ausgewählten Sicherungsvorrichtung **4** verhindert wird.

Ferner ist im Ausführungsbeispiel vorgesehen, dass ein Datum generiert und an die Zentraldatenverarbeitungsanlage und/oder an eine berechtigte Stelle und versandt und/oder es wird ein Alarm ausgelöst wird, falls der Wert 1, also die Vorspannung des ausgewählten Sicherungsmittels **4** an einem anderen Sollwert als Lagedatum, als dies in der Parametertabelle 2 gespeichert ist, vermindert ist, bzw. auf 0 abfällt. In einen solchen Fall ist davon auszugehen, dass die ausgewählte Sicherungsvorrichtung **4** nicht an dem mindestens einen Sollwert des Lagedatums, so dem vorgesehenen Entladeort, gelöst worden ist. Wahrscheinlich ist insofern entweder ein Unfall oder ein Diebstahl des Ladeguts **1** eingetreten.

Ebenfalls ist im Ausführungsbeispiel vorgesehen, dass der Führer des Fahrzeugs **3,** eine besondere Autorisierung besitzen kann, die Sicherungsvorrichtung **4** auszuwählen. Diese kann auf Vorschlag der Zentraldatenverarbeitungsanlage **7** hinzugezogen werden, wenn beispielsweise Probleme bei dem Erreichen der Vorspannung der ausgewählten Sicherungsvorrichtung **4** bestehen, so ein Erreichen des Sollwerts der Vorspannkraft als Wert 1 nicht möglich ist.

### Bezugszeichenliste:

1. Ladegut
2. Ladungsträger
3. Fahrzeug
4. Sicherungsvorrichtung
5. Messvorrichtung
6. Datenverarbeitungsanlage
7. Zentraldatenverarbeitungsanlage
8. visuelle Identifikation

## Patentansprüche

1. Verfahren zum Betrieb einer Sicherungsvorrichtung, die zur Sicherung eines Ladegutes (1), das eine Ladeeinheit bilden kann, dient, während das Ladegut (1) an einem Ladungsträger (2) oder an einem Fahrzeug (3) mittels mindestens einer Sicherungsvorrichtung (4) arretiert ist oder arretiert wird, an der mindestens einen Sicherungsvorrichtung (4) eine Messvorrichtung (5) für eine Zugspannung der mindestens einen Sicherungsvorrichtung (4) angeordnet ist, die Messvorrichtung (5) eine Datenverarbeitungsanlage (6) mit einer Vorrichtung zur Signalübertragung an eine Zentraldatenverarbeitungsanlage (7) enthält, wobei die Datenverarbeitungsanlage (6) mit der Zentraldatenverarbeitungsanlage (7) drahtlos verbunden ist, wobei die mindestens eine Sicherungsvorrichtung (4) in der Zentraldatenverarbeitungsanlage (7) vorregistriert ist mit der Identifikation (8) der jeweiligen Datenverarbeitungsanlage, der Standard Tension Force und/oder einem visuell erkennbaren Merkmal als Parametertabelle 3, mit folgenden Schritten:
| | |
|---|---|
| **S1:** | Festlegung und Speicherung eines Sollwertes(Wert 1) einer Vorspannkraft pro Ladegut (1), unter Beachtung eines Friktionskoeffizienten der Ladefläche, des Gewichtes des Ladeguts (1) und der gültigen Ladungssicherungsnorm in der Zentraldatenverarbeitungsanlage (7) als Parametertabelle 1. |
| **S2:** | Festlegung und Speicherung mindestens eines Sollwertes eines Lagedatums und einer Position und zwar mindestens eines geplanten Entladeortes pro Ladegut (1) in der Zentraldatenverarbeitungsanlage (7) als Parametertabelle 2. |
| **S3:** | Errechnung eines Vorschlages, pro Ladegut (1), basierend auf dem jeweils dem Ladegut (1) zuhörenden Wert 1 in Parametertabelle 1 sowie die noch zu Verfügung stehende mindestens eine Sicherungsvorrichtung (4) gemäß Parametertabelle 3, der für das Ladegut (1) einzusetzenden individuellen mindestens einen Sicherheitsvorrichtung und das Speichern dieses Vorschlages in Datentabelle X. |
| **S4:** | Sichern des Ladeguts (1) mittels der mindestens einen vorgeschlagenen Sicherungsvorrichtung (4). |
| **S5:** | Erfassen der Vorspannkraft (Wert A) der jeweils eingesetzten mindestens einen Sicherheitsvorrichtung durch die einzelne Messvorrichtung (5) in der Zentraldatenverarbeitungsanlage (7) als Datentabelle A. |
| **S6:** | Überprüfen, ob die Summe der Werte A pro Ladegut (1) aus Datentabelle A dem Wert 1 desselben Ladeguts (1) aus Parametertabelle 1 entspricht und bei Nichterreichung der Vorspannkraft ein Informationsdatum generieren und ab Schritt S3 wiederholen und bei Erreichung der Vorspannkraft ein Datum an die Zentraldatenverarbeitungsanlage (7) senden, dass normgerecht gesichert wurde. |
| **S7:** | Die Datentabelle A in gesteuerten Zeitabständen mit neuen durch die Messvorrichtung (5) ermittelten Werten ergänzen, |
wobei die Zentraldatenverarbeitungsanlage (7) während des Transports die Summe der Werte A pro Ladegut (1) mit dem Wert 1 desselben Ladeguts (1) vergleicht und basierend auf einer allfälligen Abnahme der Vorspannkraft in der mindestens einen Sicherungsvorrichtung (4) und unter Berücksichtigung einer vorprogrammierbaren zeitlichen Sicherheitsmarge ein Datum an die Zentraldatenverarbeitungsanlage (7) sendet, um innerhalb einer zeitlichen Sicherheitsmarge die betroffene mindestens eine Sicherheitsvorrichtung nachzuspannen.

2. Verfahren nach Anspruch 1, wobei basierend auf einer allfälligen Abnahme der Vorspannkraft in der mindestens einen Sicherungsvorrichtung (4) und unter Berücksichtigung einer vorprogrammierbaren zeitlichen Sicherheitsmarge ein Datum an die Zentraldatenverarbeitungsanlage (7) sendet, wenn innerhalb einer zeitlichen Sicherheitsmarge die betroffene mindestens eine Sicherheitsvorrichtung nachzuspannen ist und gleichzeitig angibt, welches visuell erkennbare Merkmal aus Parametertabelle 3 die betroffene mindestens eine Sicherheitsvorrichtung identifiziert.

3. Verfahren nach den Ansprüchen 1 und 2, wobei mittels einer farblichen Anzeige visuell einem Nutzer signalisiert, dass er entweder "grün", das heißt ohne Handlungsbedarf unterwegs ist, "gelb", das heißt, dass er innerhalb der zeitlichen Sicherheitsmarge nachspannen sollte oder "rot", das heißt, es wird der jeweilige Wert 1 aus Parametertabelle 1 bereits effektiv unterschritten.

4. Verfahren nach einem der vorherigen Ansprüche, wobei die Zentraldatenverarbeitungsanlage (7) fortlaufend die Position des Ladeguts (1) in der Zentraldatenverarbeitungsanlage (7) als Datentabelle B speichert.

5. Verfahren nach einem der vorherigen Ansprüche, wobei eine Route für die Erreichung der in der Parametertabelle 2 enthaltenen Entladeorte als Datentabelle C gespeichert ist.

6. Verfahren nach Anspruch 5, dass fortlaufend die Datentabelle B mit der Datentabelle C verglichen wird.

7. Verfahren nach Anspruch 4 oder 5, dass Daten aus den Datentabellen A und/oder B und/oder C in einen externen Datenspeicher mit einer definierten Frequenz übertragen werden.

8. Verfahren nach einem der vorherigen Ansprüche, wobei bei einem Abfallen der Vorspannkraft der mindestens einen Sicherheitsvorrichtung des Ladeguts (1), wobei die Vorspannkraft in der in Datentabelle X gespeichert ist, an einem anderen Ort als in Parametertabelle 2 vorgesehen, ein Datum an eine vorprogrammierte Adresse an dem externen Datenspeicher gesendet wird.

9. Verfahren nach einem der Ansprüche 4 bis 8, wobei eine Abweichung von einer errechneten Route mit der tatsächlichen befolgten Route ohne vorgängig erfolgter spezifischer Autorisierung einer vorprogrammierten Adresse an dem externen Datenspeicher gesendet wird.

## Claims

1. A method for operating a securing device used for securing a cargo item (1) that can form a cargo unit while the cargo item (1) is locked on a load carrier (2) or on a vehicle (3) by means of at least one securing device (4), a measuring device (5) for a tension force of the at least one securing device (4) being arranged on the at least one securing device (4), the measuring device (5) containing a data-processing system (6) comprising a device for transmitting signals to a central data-processing system (7), whereby the data-processing system (6) being wirelessly connected to the central data-processing system (7), whereby the at least one securing device (4) being pre-registered in the central data-processing system (7) with the identification (8) of the respective data-processing system, the standard tension force and/or a visually perceptible feature as parameter table 3, comprising the following steps:
| | |
|---|---|
| **S1:** | establishing and storing a target value (value 1) of a pre-tensioning force per cargo item (1), taking into account a coefficient of friction of the loading surface, the weight of the cargo item (1), and the applicable cargo securing standard in the central data-processing system (7) as parameter table 1; |
| **S2:** | establishing and storing at least one target value of an item of location data and a position, specifically of at least one planned unloading point per cargo item (1), in the central data-processing system (7) as parameter table 2; |
| **S3:** | calculating a suggestion, per cargo item (1), based on value 1 in parameter table 1 associated with the respective cargo item (1) and on the still available at least one securing device (4) according to parameter table 3, for the individual at least one securing device to be used for the cargo item (1), and storing this suggestion in data table X; |
| **S4:** | securing the cargo item (1) by means of the at least one suggested securing device (4); |
| **S5:** | detecting the pre-tensioning force (value A) of the at least one used securing device by the individual measuring device (5) in the central data-processing system (7) as data table A; |
| **S6:** | checking whether the sum of the values A per cargo item (1) from data table A corresponds to value 1 of the same cargo item (1) from parameter table 1, and if the pre-tensioning force is not achieved, generating an information data and repeating the steps starting from step S3, and if the pre-tensioning force is achieved, sending a data confirming that said cargo item has been secured in line with the applicable standard to the central data-processing system (7); |
| **S7:** | updating data table A with new values determined by the measuring device (5) at controlled time intervals, |
wherein the central data-processing system (7) compares the sum of the values A per cargo item (1) with value 1 of the same cargo item (1) during transport and, based on a potential decrease in pre-tensioning force in the at least one securing device (4) and taking into account a pre-programmable time safety margin, a data is sent to the central data-processing system (7) in order to re-tension the respective at least one securing device within a time safety margin.

2. Method according to Claim 1, wherein, based on a potential decrease in the pre-tensioning force in the at least one securing device (4) and taking into account a pre-programmable time safety margin, a data is sent to the central data-processing system (7) when the respective at least one securing device needs to be re-tensioned within a time safety margin, and at the same time it is indicated which visually detectable feature from parameter table 3 identifies the respective at least one securing device.

3. Method according to Claims 1 and 2, wherein a color indicator is used to visually signal to a user by "green" that they are en route with no need for action, by "yellow" that they should re-tension within the time safety margin, or by "red" that tension force has in fact already fallen below the applicable value 1 from parameter table 1.

4. Method according to any of the preceding claims, wherein the central data-processing system (7) continuously stores the position of the cargo item (1) in the central data-processing system (7) as data table B.

5. Method according to any of the preceding claims, wherein a route to reach the unloading points contained in parameter table 2 is stored as data table C.

6. Method according to Claim 5, wherein the data table B is continuously compared with the data table C.

7. Method according to Claim 4 or 5, wherein the data from the data tables A and/or B and/or C is transferred to an external data memory at a defined frequency.

8. Method according to any of the preceding claims, wherein, when the pre-tensioning force of the at least one securing device of the cargo item (1), whereas the pre-tensioning force being stored in data table X, decreases at another point than that specified in parameter table 2, a data is sent to a pre-programmed address on the external data memory.

9. Method according to any of Claims 4 to 8, wherein any deviation of the route that is actually followed from a calculated route without advance specific authorization is sent to a pre-programmed address on the external data memory.

## Revendications

1. Procédé de fonctionnement d'un dispositif de fixation, destiné à la fixation d'une cargaison (1) pouvant former une unité de chargement, alors que la cargaison (1) est immobilisée ou en cours de immobilisation sur un support de chargement (2) ou sur un véhicule (3) au moyen d'au moins un dispositif de fixation (4), un dispositif de mesure (5) pour une contrainte de traction dudit au moins un dispositif de fixation (4) étant disposé sur ledit au moins un dispositif de fixation (4), le dispositif de mesure (5) comprenant une installation de traitement des données (6) avec un dispositif de transmission de signaux vers une installation centrale de traitement des données (7), où l'installation de traitement des données (6) est reliée sans fil à l'installation centrale de traitement des données (7), où ledit au moins un dispositif de fixation (4) est pré-enregistré dans l'installation centrale de traitement des données (7) avec l'identification (8) de l'installation respective de traitement des données, la force de tension standard et/ou une caractéristique visuellement reconnaissable en tant que tableau de paramètres 3, comprenant les étapes suivantes :
| | |
|---|---|
| **S1 :** | détermination et mémorisation d'une valeur de consigne (valeur 1) d'une force de précontrainte par cargaison (1), en tenant compte d'un coefficient de frottement de la surface de chargement, du poids de la cargaison (1) et de la norme de fixation en vigueur, dans l'installation centrale de traitement des données (7) en tant que tableau de paramètres 1. |
| **S2 :** | détermination et mémorisation d'au moins une valeur de consigne d'une donnée de location, et d'une position et d'au moins un lieu de déchargement prévu par cargaison (1), dans l'installation centrale de traitement des données (7) en tant que tableau de paramètres 2. |
| **S3 :** | calcul d'une proposition, par cargaison (1), sur la base de la valeur 1 associée à la cargaison (1) respective du tableau de paramètres 1 et dudit au moins un dispositif de fixation (4) encore disponible suivant le tableau de paramètres 3, dudit au moins un dispositif de sécurité individuel à mettre en œuvre pour la cargaison (1), et mémorisation de cette proposition dans le tableau de données X. |
| **S4 :** | fixation de la cargaison (1) au moyen dudit au moins un dispositif de fixation (4) proposé. |
| **S5 :** | détermination de la force de précontrainte (valeur A) par le dispositif de mesure (5) individuel dans l'installation centrale de traitement des données (7) dudit au moins un dispositif de sécurité en tant que tableau de données A. |
| **S6 :** | vérification, si la somme des valeurs A par cargaison (1) du tableau de données A correspond à la valeur 1 de la même cargaison (1) dans le tableau de paramètres 1, et, si la force de précontrainte n'est pas obtenue, génération d'une donnée d'information et répétition depuis l'étape S3, et si la force de précontrainte est obtenue, envoi d'une donnée à l'installation centrale de traitement des données (7), selon laquelle la fixation a été effectuée conformément aux normes applicables. |
| **S7** : | compléter le tableau de données A à intervalles temporels commandés, avec de nouvelles valeurs déterminées par le dispositif de mesure (5), |
où l'installation centrale de traitement des données (7) compare pendant le transport la somme des valeurs A par cargaison (1) avec la valeur 1 de la même cargaison (1) et, sur la base d'une diminution éventuelle de la force de précontrainte dans ledit au moins un dispositif de fixation (4), et en tenant compte d'une marge de sécurité temporelle pré-programmable, envoie une donnée à l'installation centrale de traitement des données (7), pour retendre ledit au moins un dispositif de sécurité concerné pendant une marge de sécurité temporelle.

2. Procédé selon la revendication 1, où, sur la base d'une diminution éventuelle de la force de précontrainte dans ledit au moins un dispositif de fixation (4), et en tenant compte d'une marge de sécurité temporelle pré-programmable, une donnée est envoyée à l'installation centrale de traitement des données (7), si pendant une marge de sécurité temporelle ledit au moins un dispositif de sécurité concerné doit être retendu, et où il est simultanément indiqué, quelle caractéristique visuellement reconnaissable du tableau de paramètres 3 identifie ledit au moins un dispositif de sécurité concerné.

3. Procédé selon les revendications 1 et 2, où au moyen d'un affichage en couleurs, il est visuellement signalé à un utilisateur qu'il est en cours de transport soit « vert », autrement dit sans nécessité d'action, soit « jaune », autrement dit, qu'il doit retendre pendant la marge de sécurité temporelle, soit « rouge », autrement dit, que la valeur 1 du tableau de paramètres 1 est déjà effectivement sous-dépassée.

4. Procédé selon l'une quelconque des revendications précédentes, où l'installation centrale de traitement des données (7) mémorise en continu la position de la cargaison (1) dans l'installation centrale de traitement des données (7) en tant que tableau de données B.

5. Procédé selon l'une quelconque des revendications précédentes, où un itinéraire pour atteindre le lieu de déchargement compris dans le tableau de paramètres 2 est mémorisé en tant que tableau de données C.

6. Procédé selon la revendication 5, où le tableau de données B est comparé en continu avec le tableau de données C.

7. Procédé selon la revendication 4 ou la revendication 5, où les données des tableaux de données A et/ou B et/ou C sont transférées vers une mémoire de données extérieure à une fréquence définie.

8. Procédé selon l'une quelconque des revendications précédentes, où, en cas de chute de la force de précontrainte dudit au moins un dispositif de sécurité de la cargaison (1), la force de précontrainte étant mémorisée dans le tableau de données X, à un autre emplacement que dans le tableau de paramètres 2, une donnée est envoyée à une adresse pré-programmée de la mémoire de données extérieure.

9. Procédé selon l'une quelconque des revendications 4 à 8, où un écart d'un itinéraire calculé par rapport à l'itinéraire effectivement suivi est envoyé sans autorisation préalable d'une adresse pré-programmée de la mémoire de données extérieure.
